# FASCICULE DE BREVET EUROPEEN

(11) **EP 2 762 207 B1**
(45) Date de publication et mention de la délivrance du brevet: **02.08.2017**
(21) Numéro de dépôt: 14153147.5
(22) Date de dépôt: 30.01.2014
(51) Int. Cl.: A63C 5/11, A63C 11/22, B64C 39/02, B64D 17/00

(54) **Aile destinéee a être portée sur le dos d'un utilisateur pratiquant un sport de glisse**
Flügel zum Tragen auf dem Rücken eines Benutzers, der einen Gleitsport betreibt
Wing intended for being worn on the back of a user practising a boardsport

(30) Priorité: 30.01.2013 FR 1350768
(43) Date de publication de la demande: 06.08.2014
(73) Titulaire: WINGJUMP, 01150 Saint Sorlin en Bugey (FR)
(72) Inventeur: Dejey, Marc, 73100 AIX LES BAINS (FR); Arot, Florian, 01470 MONTAGNIEU (FR)
(74) Mandataire: Cabinet Laurent & Charras

(56) Documents cités:
- DE-A1- 19 816 627
- DE-U1- 8 908 639
- DE-U1- 9 002 011
- FR-A- 1 528 013
- US-B1- 7 097 134

## Description

### DOMAINE TECHNIQUE

La présente invention se rapporte au secteur technique des sports de glisse et de ses accessoires, et concerne plus particulièrement une aile destinée à être portée sur le dos d'un utilisateur pratiquant des sports de glisse, tels que le ski ou le surf des neiges...

### ART ANTERIEUR

On connaît de l'art antérieur, et notamment de la demande de brevet internationale WO 03/106262, un dispositif permettant de procurer à son utilisateur des sensations de portance à des vitesses de déplacement relativement faibles, notamment lorsque celui-ci pratique des activités de glisse tel que le ski. Ces sensations de portance peuvent notamment aider l'utilisateur à effectuer des figures acrobatiques telles que des sauts.

Ce dispositif se présente sous la forme d'une aile à caissons comprenant des moyens pour recevoir les bras d'un utilisateur au moins partiellement à l'intérieur de l'aile, de telle sorte que les bras de l'utilisateur commandent le déploiement de l'aile, le plan de référence de l'aile formant un angle avec le plan du buste de l'utilisateur.

Ce dispositif ne permet d'adapter sur le dos d'un utilisateur qu'un seul type d'aile, à savoir une aile du type à caissons, et limite ainsi les sensations de portance procurées à l'utilisateur aux seules sensations procurées par ce type d'aile. On note également qu'avec ce type de dispositif, il est difficile de régler la portance et de varier l'incidence de l'aile.

Document DE 198 16 627 décrit une aile adaptée à la pratique de sports de glisse, et permettant de moduler son action en fonction de la position des bras. Document US 7097134 décrit une aile selon le préambule de la revendication 1.

### EXPOSE DE L'INVENTION

Le but de l'invention est de remédier aux inconvénients précités en proposant une aile destinée à être portée sur le dos d'un utilisateur pratiquant un sport de glisse permettant à l'utilisateur qui la porte, de contrôler sa tension et son angle, c'est-à-dire l'angle formé entre le plan de référence de l'aile et le plan du buste de l'utilisateur, de manière optimale pour que, d'une part, celle-ci procure à l'utilisateur des sensations de portance lui permettant par exemple de faciliter la réalisation de figures acrobatiques telles que des sauts, et, d'autre part, de lui permettre de faciliter et d'amplifier son freinage.

Un autre objectif est de permettre l'utilisation de tout type d'aile pour procurer des sensations de portance différentes en fonction du type d'aile choisi.

Un autre objectif de l'invention est de permettre à l'aile de s'adapter à tout utilisateur de toute taille.

Pour atteindre ses objectifs, il a été mis au point une aile selon l'objet de la revendication 1, destinée à être portée sur le dos d'un utilisateur pratiquant un sport de glisse. L'aile s'étend longitudinalement entre un bord d'attaque avant et un bord de fuite arrière, et comprend au niveau de son bord d'attaque avant des moyens aptes à maintenir ledit bord d'attaque sur les bras et les épaules de l'utilisateur, le plan de référence de l'aile forme un angle avec le plan du buste de l'utilisateur.

Selon l'invention, ladite aile comprend des moyens de contrôle, s'étendant longitudinalement le long dudit bord d'attaque, et présentant au niveau de chacune des extrémités du bord d'attaque, des moyens de préhension permettant à l'utilisateur d'agir sur lesdits moyens de contrôle afin d'une part, de tendre ou de détendre ledit bord d'attaque et, d'autre part, de varier l'angle de l'aile.

De cette manière, l'utilisateur peut, par le mouvement de ses bras, agir sur la tension du bord d'attaque avant de l'aile et également sur l'angle de l'aile formé entre le plan de référence de ladite aile et le plan du buste de l'utilisateur. Les moyens de contrôle étant agencés le long dudit bord d'attaque, il est possible de gérer de façon optimale la tension dudit bord d'attaque. L'aile utilisée peut être de tout type, telle qu'une aile du type à simple peau, une aile du type à caissons, une aile du type à boudins gonflables ou bien tout autre type d'aile pouvant procurer à l'utilisateur des sensations de portance et/ou de freinage.

Avantageusement les moyens de contrôle sont réglables en longueur. Cette caractéristique permet notamment de pouvoir adapter l'aile selon l'invention, à tout utilisateur de toute taille, mais également à tout type d'aile.

Selon un mode de réalisation préféré de l'invention, le bord de fuite arrière de l'aile comprend des moyens d'attache de celui-ci à une partie du corps de l'utilisateur. De cette manière, lorsque l'utilisateur tend le bord d'attaque de ladite aile, l'angle formé entre le plan de référence de l'aile et le plan du buste de l'utilisateur est optimal pour procurer des sensations importantes de portance et/ou de freinage.

Selon un autre mode de réalisation préféré de l'invention, le bord de fuite arrière de l'aile est libre, et les moyens de préhension des moyens de contrôle sont reliés, d'une part, à une extrémité du bord d'attaque avant et, d'autre part, à une extrémité du bord de fuite arrière, lesdits moyens de préhension se prolongeant sur la longueur de l'aile. Ainsi, cela permet à l'utilisateur agissant sur lesdits moyens de préhension, d'avoir un contrôle complet de l'aile et de pouvoir gérer au mieux son inclinaison en contrôlant d'une part, le bord d'attaque avant et d'autre part, le bord de fuite arrière.

Avantageusement, les moyens de préhension sont réglables en longueur. Cette caractéristique permet notamment de s'adapter à la taille et au type d'aile, mais également de s'adapter à la taille de l'utilisateur. En effet, si les moyens de préhension sont réglés plus long, ils pourront plus facilement être atteints par un utilisateur de petite taille.

Selon l'invention, les moyens de contrôle et les moyens de préhension se présentent sous la forme de sangles.

Selon une autre caractéristique de l'invention, les sangles formant moyens de préhension comprennent chacune un manchon, attaché à ladite sangle au niveau de son extrémité reliée au bord d'attaque, ledit manchon étant apte à recevoir la poignée d'un bâton de ski. Cela permet à l'utilisateur de pouvoir saisir simultanément les moyens de préhension pour le contrôle de l'aile, et des bâtons de ski, couramment utilisés lors de la pratique du ski. Avantageusement, les sangles formant moyens de préhension comprennent chacune une boucle à leur extrémité du côté du bord de fuite, ladite boucle étant apte à recevoir l'extrémité opposée à la poignée, d'un bâton de ski.

Avantageusement, dans l'aile selon l'invention, les sangles formant moyens de préhension comprennent chacune un manchon agencé de manière coulissante autour de ladite sangle.

De préférence, les moyens de préhension sont reliés au bord d'attaque avant de l'aile et au bord de fuite arrière de l'aile par l'intermédiaire de moyens d'attache complémentaires amovibles.

Selon des modes de réalisation particuliers de l'invention, l'aile est du type à simple peau, du type à caissons, ou du type à boudins gonflables.

### BREVE DESCRIPTION DES DESSINS

L'invention sera bien comprise et d'autres caractéristiques et avantages de l'invention ressortiront clairement de la description qui en est faite ci-après, à titre indicatif et nullement limitatif, en référence aux figures annexées, dans lesquelles :
- la figure 1 est une représentation schématique en perspective d'un utilisateur portant une aile qui ne comporte pas toutes les caractéristiques de l'invention, l'aile étant du type à simple peau et l'utilisateur agissant sur les moyens de contrôle pour tendre le bord d'attaque avant de ladite aile ;
- la figure 2 est une représentation schématique en perspective similaire à celle de la figure 1, l'aile étant du type à caissons ;
- la figure 3 est une représentation schématique en perspective d'une forme de réalisation des moyens de préhension des moyens de contrôle selon l'invention, adaptés sur une aile du type à caissons ;
- la figure 4 est une représentation schématique en perspective similaire à celle de la figure 1 ou 2, l'aile étant du type à boudins gonflables ;
- la figure 5 est une représentation schématique en perspective d'une forme de réalisation des moyens de préhension des moyens de contrôle selon l'invention, adaptés sur une aile du type à boudins ;
- la figure 6 est une représentation schématique en perspective d'une autre forme de réalisation des moyens de préhension des moyens de contrôle selon l'invention, adaptés sur une aile du type à boudins ;
- la figure 7 est une représentation schématique en perspective illustrant le caractère amovible des moyens de préhension des moyens de contrôle selon l'invention.

### EXPOSE DETAILLE DE L'INVENTION

L'aile (1) destinée à être portée sur le dos d'un utilisateur pratiquant un sport de glisse est, selon l'invention, du type de celle s'étendant longitudinalement entre un bord d'attaque avant (2) et un bord de fuite arrière (3). L'aile (1) comprend à cet effet, au niveau de son bord d'attaque avant (2), des moyens (4) aptes à maintenir ledit bord d'attaque (2) sur les bras et les épaules de l'utilisateur. Le plan de référence de l'aile (1), c'est-à-dire le plan s'étendant entre le bord d'attaque avant (2) et le bord de fuite arrière (3), forme un angle (α) avec le plan du buste de l'utilisateur, c'est-à-dire le plan frontal passant par la colonne vertébrale de l'utilisateur au niveau du cou et au niveau de sa jonction avec le bassin.

La variation de cet angle (α) permet de varier les effets de l'air sur l'aile (1) lorsque l'utilisateur est en mouvement pendant la pratique d'un sport de glisse tel que le ski par exemple. En fonction des effets de l'air sur l'aile (1), des sensations de portance et/ou de freinage sont procurées à l'utilisateur portant une telle aile (1). En d'autres termes, plus l'angle (α) entre le plan de référence de l'aile (1) et le plan du buste de l'utilisateur est faible, plus les sensations sont importantes. L'angle (α) de l'aile (1) pouvant en pratique varier de 0° à 90°.

Selon l'invention, l'aile (1) comprend des moyens de contrôle (6), s'étendant longitudinalement le long dudit bord d'attaque avant (2), et présentant au niveau de chacune des extrémités du bord d'attaque (2), des moyens de préhension permettant à l'utilisateur d'agir sur lesdits moyens de contrôle afin d'une part, de tendre ou de détendre ledit bord d'attaque (2) et, d'autre part, de varier l'angle (α) de l'aile (1).

D'une manière générale, les matériaux utilisés pour la réalisation d'une telle aile (1) sont des matériaux classiques dans le domaine des ailes (1), tels que par exemple des tissus synthétiques légers et relativement peu poreux à l'air. A partir des caractéristiques à la base de l'invention, plusieurs types d'ailes peuvent être utilisés.

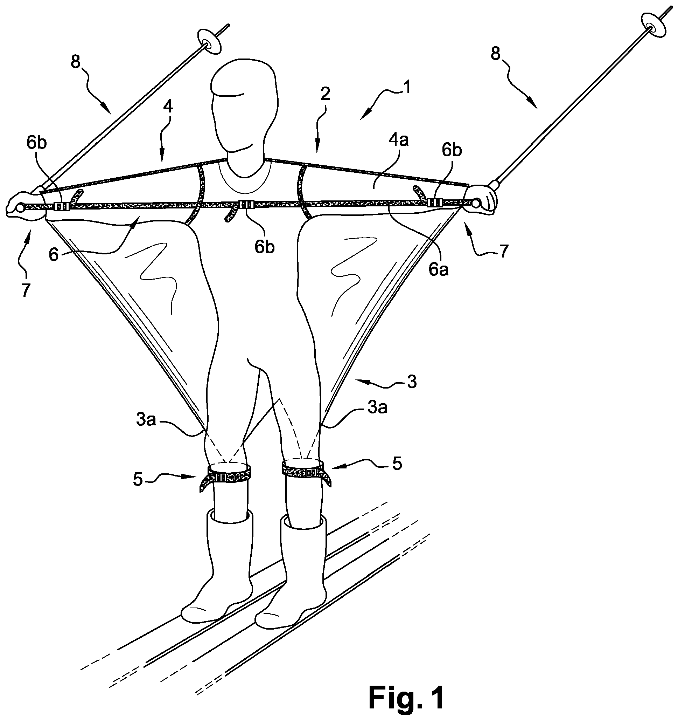

En référence à la figure 1 qui représente une aile (1) du type à simple peau, les moyens (4) aptes à maintenir ledit bord d'attaque (2) sur les bras et les épaules dudit utilisateur se présentent sous la forme d'une paire de manches (4a). En effet, le bord d'attaque (2) est solidarisé avec la partie supérieure desdites manches (4a), notamment par couture.

Par aile (1) du type « à simple peau », on désigne une aile (1) ne comprenant pas d'agencement intérieur gonflable ou autre. Une telle aile (1) ne comprend pas d'épaisseur et est par exemple constituée par une seule couche de tissu, ou bien par un empilement de plusieurs couches de tissus mais restant toujours dans le même plan et ne définissant aucune volume interne.

Selon la figure 1, ce type d'aile (1) est notamment de forme triangulaire, de sorte que le bord de fuite arrière (3) d'une telle aile (1) est constitué par les deux bords libres du triangle, autres que le bord d'attaque avant (2). L'extrémité de l'aile (1), plus précisément l'intersection entre les deux bords de fuite, se divise en deux parties (3a). Chacune des parties (3a) comprend un moyen d'attache (5) à une partie du corps de l'utilisateur. Ces moyens d'attache (5) se présentent notamment sous la forme de sangles aptes à venir entourer la partie de hanche, de genou, de mollet ou de pied de l'utilisateur. Cette caractéristique permet notamment de tendre sensiblement l'aile (1) dans sa longueur et de fixer le bord de fuite (3).

Les moyens de contrôle (6) sont agencés au niveau du bord d'attaque (2) de l'aile (1). Ces moyens de contrôle (6) se présentent sous la forme d'une sangle (6a) s'étendant longitudinalement le long du bord d'attaque (2). Plus précisément, la sangle (6a) est solidarisée sur la partie supérieure des manches (4a), notamment par couture, s'étend le long de celles-ci et forme une boucle au niveau des mains de l'utilisateur pour être également cousue au niveau de la partie inférieure desdites manches (4a). Les extrémités de la sangle (6a) sont jointes de manière à former un ensemble de forme oblongue entourant la partie de tête de l'utilisateur en passant par ses deux mains, par le dessous et le dessus des manches (4a). La partie d'extrémité de l'ensemble de forme oblongue se trouvant au niveau des mains de l'utilisateur et formant des moyens de préhension (7), permet à l'utilisateur de les saisir pour agir sur ledit bord d'attaque (2) de l'aile (1). La sangle (6a) est réglable en longueur par l'intermédiaire de moyens (6b) de coulissement de maintien de la sangle.

De cette manière, le bord de fuite (3) étant attaché à une partie du corps de l'utilisateur telle que les genoux par exemple, l'utilisateur peut agir sur le bord d'attaque (2) par un mouvement de ses bras pour tendre ou détendre le bord d'attaque (2) de l'aile (1). Plus précisément, lorsque l'utilisateur, saisi les moyens de préhension (7) et écarte les bras, le bord d'attaque (2) de l'aile (1) se retrouve dans un état tendu et l'aile (1) se trouve dans un état déployé. Lorsque l'utilisateur est en mouvement, une telle tension du bord d'attaque (2) et de l'aile (1) crée une résistance au passage de l'air et procure des sensations de freinage ou de portance en fonction de l'angle (α) formé entre le plan de référence de l'aile (1) et le plan du buste de l'utilisateur. Le déploiement de l'aile (1) dépend entièrement de la position des bras de l'utilisateur. Lorsque l'utilisateur garde les bras le long de son corps, l'aile (1) n'est pas déployée et ne procure aucune sensation de portance et/ou de freinage. L'utilisateur est libre de ses mouvements de ses bras.

Un tel agencement des moyens de préhension (7) n'empêche pas l'utilisation par l'utilisateur de bâton de ski (8), qu'il peut maintenir dans ses mains en même temps que les moyens de préhension (7).

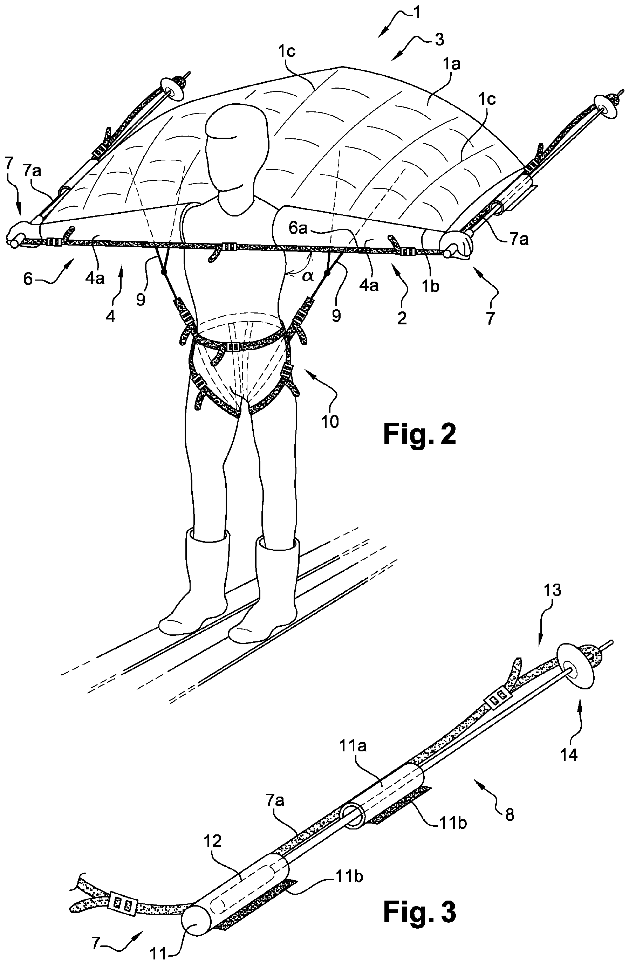

En référence à la figure 2, l'aile (1) est du type à caissons. Par aile (1) du type « à caissons », on désigne une aile (1) comprenant une paroi supérieure (1a) et une paroi inférieure (1b) qui sont reliées par des membrures (1c) de tissus qui déterminent, sur toute la longueur du profil, l'écartement maximal des deux parois (1a, 1b), donc l'épaisseur de l'aile (1). Ces membrures (1c) définissent une pluralité de chambres internes, appelées caissons. Le profil en épaisseur peut ainsi être déterminé précisément pour obtenir, en fonction d'une gamme de vitesse de vent relatif donnée, un bon rapport portance/traînée. Dans une aile (1) du type à caissons, le maintien de l'écartement des parois supérieure (1a) et inférieure (1b) est obtenu en créant une surpression d'air à l'intérieur de l'aile (1), cette surpression étant elle-même obtenue en emprisonnant de l'air en surpression prélevé à l'extérieur de l'aile (1), généralement sur le bord d'attaque (2). Dans une aile (1) du type à caissons, c'est la vitesse du vent relatif qui permet de « gonfler » l'aile (1) et de lui donner sa forme aérodynamiquement efficace.

Dans une telle aile (1), les moyens (4) aptes à maintenir le bord d'attaque (2) de l'aile (1) se présentent également sous la forme d'une paire de manches (4a), ledit bord d'attaque (2) étant cousu sur la partie supérieure desdites manches (4a). Un tel type d'aile (1) est pourvu d'entrées d'air (non représentées) pour permettre l'admission d'air en surpression dans le volume interne de l'aile (1), et faire circuler l'air dans les caissons délimités par les membrures internes (1c) et les deux parois (1a, 1b), de manière à gonfler ladite aile (1) pour la rendre apte à procurer des sensations de portance et/ou de freinage. Ces entrées d'air sont généralement situées sur le bord d'attaque (2), notamment dans sa partie inférieure.

Le bord de fuite (3) de l'aile (1) du type à caissons est libre. La paroi inférieure (1b) de l'aile (1) est reliée par l'intermédiaire de suspentes (9) à des moyens d'attache (10) sur une partie du corps de l'utilisateur. Les moyens d'attache (10) se présentent notamment sous la forme d'un baudrier d'escalade. Les suspentes (9) sont fixées audit baudrier (10) et sont réglables en longueur. Le réglage desdites suspentes (9) permet de régler la valeur initiale de l'angle (α) formé entre le plan de référence de ladite aile (1) et le plan du buste de l'utilisateur.

Les moyens de contrôle (6) se présentent sous la forme d'une sangle (6a) cousue sur la partie inférieure des manches (4a) et réglable en longueur.

Les moyens de contrôle (6) comprennent des moyens de préhension (7) destinés à être saisi par l'utilisateur pour agir sur la tension et l'angle (α) de l'aile (1). Chaque moyen de préhension se présente sous la forme d'une sangle (7a), agencée à l'extrémité du bord d'attaque (2) et reliée, d'une part audit bord d'attaque avant (2), et d'autre part, au bord de fuite arrière (3). La sangle (7a) est réglable en longueur pour s'adapter à toute taille d'aile (1), mais également à toute taille d'utilisateur.

En référence à la figure 3, la sangle (7a) comprend un manchon (11) agencé à son extrémité au niveau du bord d'attaque (2), le manchon (11) étant apte à recevoir la poignée (12) d'un bâton de ski (8). L'utilisateur peut de cette manière saisir le manchon (11) pour saisir simultanément les moyens de préhension (7) et la poignée (12) du bâton de ski (8). L'autre extrémité de la sangle formant moyens de préhension (7) forme une boucle (13) de manière à recevoir l'extrémité (14), opposée à la poignée (12), dudit bâton de ski (8). Ainsi, cela permet à l'utilisateur, en agissant sur la poignée (12) du bâton de ski (8), et notamment en l'inclinant par exemple, de jouer sur le bord de fuite (3) pour en modifier son inclinaison. Un tel agencement permet de contrôler de manière optimale la tension de l'aile (1) et également son inclinaison, c'est-à-dire l'angle (α) formé entre le plan de référence de l'aile (1) et le plan du buste de l'utilisateur. Les sensations de portance et/ou de freinage sont plus importantes et contrôlées par l'utilisateur. Un autre manchon (11a) peut être agencé au niveau de la partie intermédiaire de la sangle (7a) pour recevoir la partie intermédiaire du bâton de ski (8), pour une plus grande maitrise de la totalité de la longueur de l'aile (1). Les manchons cylindriques (11, 11a) sont notamment des manchons en tissu s'ouvrant sur la longueur par l'intermédiaire de bandes auto-agrippantes complémentaires (11b).

Ainsi, l'utilisateur peut saisir les moyens de préhension (7) formés par les sangles (7a) et tendre le bord d'attaque (2) de l'aile. L'utilisateur varie l'angle (α) de l'aile par le mouvement de ses bras et également par l'inclinaison des bâtons de ski (8). La variation de cet angle (α) permet, lors de la pratique du sport de glisse, d'opposer plus de résistance au vent relatif lié au déplacement de l'utilisateur. Ainsi, plus l'angle (α) formé entre le plan de référence de l'aile (1) et le plan du buste de l'utilisateur est faible, plus la sensation de portance augmente pour atteindre une sensation de freinage. Cette sensation de portance pouvant notamment aider l'utilisateur dans la réalisation de figures acrobatiques telles que des sauts, et la sensation de freinage permet d'amplifier le freinage manuel de l'utilisateur et d'augmenter sa sécurité lors de la pratique du ski.

Plus précisément, l'aile définit un plan de référence formant un angle (α) avec le plan du buste de l'utilisateur. Le plan de référence de l'aile (1) forme également un angle avec la trajectoire de l'utilisateur, de sorte que si cet angle est inférieur ou égale à 0°, aucune sensation de portance et/ou de freinage n'est procurée à l'utilisateur. En revanche, si cet angle est supérieur à 0° et jusqu'à 5°, une sensation de portance, qui permet d'obtenir une légère sustentation, donc un allégement de l'utilisateur est procurée à celui-ci. Enfin, si cet angle est supérieur à 5°, la portance augmente et une ressource, c'est-à-dire une restitution de l'énergie vitesse, ainsi qu'un freinage de plus en plus efficace sont procurés à l'utilisateur.

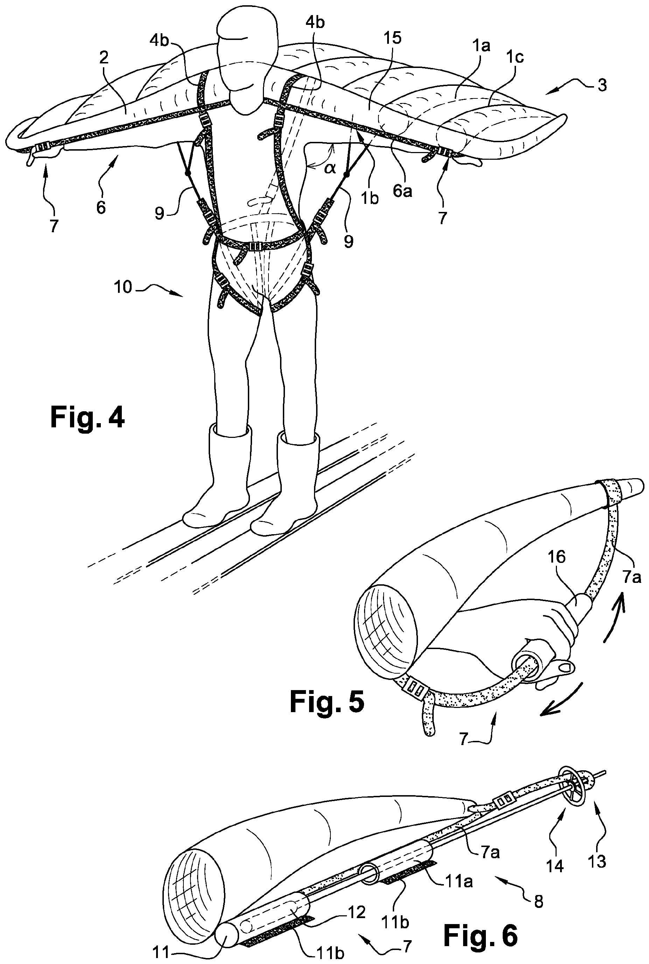

En référence à la figure 4, l'aile (1) est du type à boudins gonflables. Par aile (1) du type « à boudins gonflables », on désigne une aile (1) dont le bord d'attaque (2) est réalisé par une partie gonflable (15), notamment un boudin gonflable. Ce boudin gonflable (15) fait office de bord d'attaque (2) et s'étend donc sur la totalité de la largeur de l'aile (1). Les deux extrémités du boudin (15) se prolongent sur la longueur de l'aile (1), jusqu'au bord de fuite arrière (3) de l'aile (1). Le boudin (15) est destiné à être posé sur les épaules d'un utilisateur. La partie de l'aile se situant entre ledit bord d'attaque (2) et ledit bord de fuite (3) est similaire à celle d'une aile du type à caissons, précédemment décrite. Ainsi, l'aile comprend de la même manière, une paroi supérieure (1a) et une paroi inférieure (1b) qui sont reliées par des membrures (1c) de tissus qui déterminent, sur toute la longueur du profil, l'épaisseur de l'aile (1) et qui définissent une pluralité de caissons. De la même manière également, le bord de fuite (3) de l'aile (1) à boudins gonflables est libre et la paroi inférieure (1b) de l'aile (1) est reliée par l'intermédiaire de suspentes (9), réglables en longueur, à un baudrier (10).

Les moyens (4) aptes à maintenir le bord d'attaque (2) de l'aile (1) sur les épaules de l'utilisateur se présentent sous la forme de deux sangles (4b) reliées, d'une part, à un baudrier (10) porté par l'utilisateur, et d'autre part, audit bord d'attaque (2) et plus particulièrement, audit boudin gonflable (15). Lesdites sangles (4b) sont réglables en longueur afin de s'adapter à tout utilisateur de toute taille. Le boudin gonflable (15) présente une forme ergonomique pour s'adapter à la forme du cou de l'utilisateur portant l'aile (1).

Les moyens de contrôle (6) se présentent sous la forme d'une sangle (6a) cousue sur la partie inférieure du boudin gonflable (15). La sangle (6a) est réglable en longueur pour s'adapter à toute taille d'aile (1) et d'utilisateur.

Les moyens de contrôle (6) comprennent des moyens de préhension (7) destinés à être saisis par l'utilisateur pour agir sur la tension et l'angle (α) de l'aile (1). Chaque moyen de préhension (7) se présente sous la forme d'une sangle (7a), agencée à l'extrémité du bord d'attaque (2) et reliée, d'une part audit boudin gonflable (15), et d'autre part, au bord de fuite arrière (3). La sangle (7a) est réglable en longueur pour s'adapter à toute taille d'aile (1), mais également à toute taille d'utilisateur.

En référence à la figure 5 et dans une forme de réalisation particulière, les sangles (7a) formant moyens de préhension (7) peuvent chacune comprendre un manchon (16) agencé de manière coulissante autour de ladite sangle (7a). Ce manchon (16) est en pratique maintenu par l'utilisateur. L'utilisateur serre donc le manchon (16) et simultanément la sangle (7a) pour agir sur celle-ci afin de varier la tension et l'angle (α) de l'aile (1) pour procurer audit utilisateur des sensations de portance et/ou de freinage, lors de la pratique du sport de glisse. Le manchon (16) est agencé de manière coulissante autour de la sangle (7a) pour permettre à l'utilisateur de maintenir la sangle, par l'intermédiaire de ce manchon, à différents endroits pour agir différemment sur l'aile (1). Pour cela, l'utilisateur desserre légèrement la main pour lâcher prise sur la sangle (7a), mais en gardant toujours la prise sur le manchon (16), en le faisant coulisser sur ladite sangle (7a) pour la serrer à un autre niveau. De ce fait, les moyens de préhension (7) ne sont jamais lâchés par l'utilisateur, et les risques de brûlures par exemple avec le coulissement de la sangle dans la main de l'utilisateur sont supprimés. Il s'ensuit un confort optimal d'utilisation.

Dans une autre forme de réalisation particulière, et en référence à la figure 6, les moyens de préhension (7) peuvent être similaires à ceux décrits pour l'aile (1) du type à caissons, représentés sur la figure 3. De cette manière, de tels moyens de préhension (7) n'empêchent pas l'utilisation simultanée des bâtons de ski (8), et permettent d'agir sur le bord de fuite arrière (3) de l'aile (1) afin d'avoir un contrôle complet et optimal de celle-ci.

En pratique, l'utilisateur agit de la même façon qu'avec une aile (1) du type à caissons, c'est-à-dire qu'il agit sur les moyens de préhension (7) pour tendre le bord d'attaque (2) de l'aile, et varie l'angle (α) de l'aile par le mouvement de ses bras et également par l'inclinaison des bâtons de ski (8).

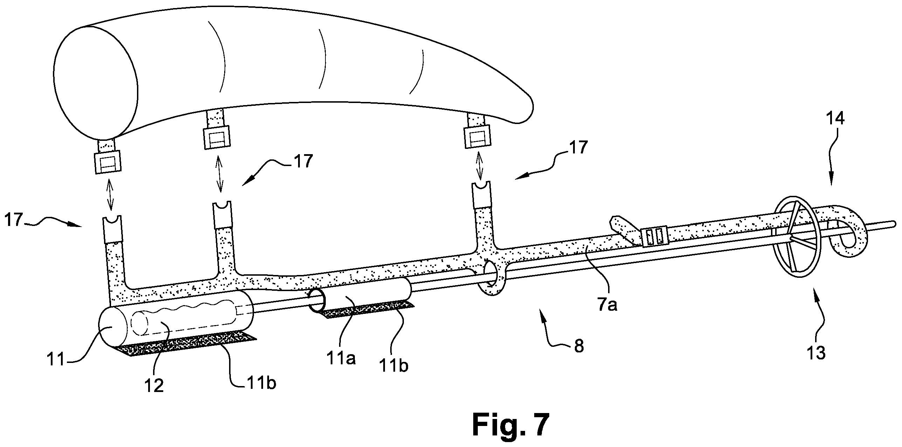

En référence à la figure 7, la sangle (7a) est reliée au bord d'attaque avant (2) de l'aile (1) et au bord de fuite arrière (3) de l'aile (1) par l'intermédiaire de moyens d'attache complémentaires amovibles (17) pour ainsi permettre de retirer facilement les moyens de préhension (7).

Les avantages ressortent bien de la description, en particulier on souligne et on rappelle que l'aile (1) selon l'invention permet d'obtenir un freinage facilité et amplifié qui augmentera la sécurité de l'utilisateur, ainsi que de créer un appui sur l'air permettant dans certains cas d'alléger l'utilisateur afin de faciliter le saut sans pouvoir voler.

## Revendications

1. Aile (1) destinée à être portée sur le dos d'un utilisateur pratiquant un sport de glisse, l'aile (1) s'étendant longitudinalement entre un bord d'attaque avant (2) et un bord de fuite arrière (3), et comprenant au niveau de son bord d'attaque avant (2) des moyens (4) aptes à maintenir ledit bord d'attaque (2) sur les bras et les épaules de l'utilisateur, ladite aile (1) définissant entre ledit bord d'attaque (2) et ledit bord de fuite (3) un plan de référence formant un angle (α) avec le plan du buste de l'utilisateur, et comprenant des moyens de contrôle (6) s'étendant longitudinalement le long dudit bord d'attaque (2), ***caractérisée en ce* que** lesdits moyens de contrôle (6) se présentent sous la forme de sangles (6a), s'étendant longitudinalement le long dudit bord d'attaque (2), et présentant au niveau de chacune des extrémités du bord d'attaque (2), des moyens de préhension (7) sous la forme de sangles (7a) permettant à l'utilisateur d'agir sur lesdits moyens de contrôle (6) afin d'une part, de tendre ou de détendre ledit bord d'attaque (2) et, d'autre part, de varier l'angle (α) de l'aile (1), les sangles (7a) qui forment moyens de préhension comprenant chacune un manchon (11) attaché à ladite sangle (7a) au niveau de son extrémité reliée au bord d'attaque (2) et apte à recevoir une poignée (12) d'un bâton de ski (8).

2. Aile (1) selon la revendication 1, ***caractérisée en ce que*** les moyens de contrôle (6) sont réglables en longueur.

3. Aile (1) selon l'une des revendications 1 et 2, ***caractérisée en ce que*** le bord de fuite arrière (3) de l'aile (1) comprend des moyens (5) d'attache de celui-ci à une partie du corps de l'utilisateur.

4. Aile (1) selon l'une des revendications 1 et 2, ***caractérisée en ce que*** le bord de fuite arrière (3) de l'aile (1) est libre, ***et en ce que*** les moyens de préhension (7) des moyens de contrôle (6) sont reliés, d'une part, à une extrémité du bord d'attaque avant (2) et, d'autre part, à une extrémité du bord de fuite arrière (3), lesdits moyens de préhension (7) se prolongeant sur la longueur de l'aile (1).

5. Aile (1) selon l'une des revendications 1 à 4, ***caractérisée en ce que*** les moyens de préhension (7) sont réglables en longueur.

6. Aile (1) selon la revendication 1, ***caractérisée en ce que*** les sangles (7a) formant moyens de préhension (7) comprennent chacune une boucle (13) à leur extrémité du côté du bord de fuite (3), ladite boucle (13) étant apte à recevoir l'extrémité (14) opposée à la poignée (12), d'un bâton de ski (8).

7. Aile (1) selon la revendication 4, ***caractérisée en ce que*** les moyens de préhension (7) sont reliés au bord d'attaque avant (2) de l'aile (1) et au bord de fuite arrière (3) de l'aile (1) par l'intermédiaire de moyens d'attache complémentaires amovibles (17).

8. Aile (1) selon la revendication 1, ***caractérisée en ce qu***'elle est du type à simple peau, du type à caissons, ou du type à boudins gonflables.

## Patentansprüche

1. Flügel (1), der dazu bestimmt ist, auf dem Rücken eines Verwenders getragen zu werden, welcher eine Gleitsportart betreibt, wobei der Flügel (1) sich in Längsrichtung zwischen einer vorderen Anströmkante (2) und einer hinteren Abströmkante (3) erstreckt und er im Bereich seiner Anströmkante (2) Mittel (4) umfasst, die dazu geeignet sind, die Anströmkante (2) auf den Armen und Schultern des Verwenders zu halten, wobei der Flügel (1) zwischen der Anströmkante (2) und der Abströmkante (3) eine Bezugsebene abgrenzt, die einen Winkel (α) mit der Ebene des Oberkörpers des Verwenders einschließt, und er Steuermittel (6) umfasst, die sich in Längsrichtung entlang der Anströmkante (2) erstrecken, ***dadurch gekennzeichnet, dass*** er Steuermittel (6) umfasst, die in Form von Gurten (6a) vorliegen, welche sich in Längsrichtung entlang der Anströmkante (2) erstrecken und, im Bereich der Enden der Anströmkante (2) jeweils Spannmittel (7) aufweisen, die in Form von Gurten (7a) vorliegen, welche es dem Verwender ermöglichen, auf die Steuermittel (6) einzuwirken, um einerseits die Anströmkante (2) zu spannen oder zu entspannen und um andererseits den Winkel (α) des Flügels (1) zu verändern, wobei die Gurte (7a), welche die Spannmittel bilden, jeweils eine Hülse (11) umfassen, die am Gurt (7a) befestigt ist, im Bereich von dessen Ende, welches an der Anströmkante (2) befestigt ist, und die ein Griffstück (12) eines Skistocks (8) aufnehmen kann.

2. Flügel (1) nach Anspruch 1, ***dadurch gekennzeichnet, dass*** die Steuermittel (6) längenverstellbar sind.

3. Flügel (1) nach einem der Ansprüche 1 und 2, ***dadurch gekennzeichnet, dass*** die hintere Abströmkante (3) des Flügels (1) Mittel (5) zum Befestigen desselben an einem Abschnitt des Körpers des Verwenders umfasst.

4. Flügel (1) nach einem der Ansprüche 1 und 2, ***dadurch gekennzeichnet, dass*** die hintere Abströmkante (3) des Flügels (1) frei ist, ***und dadurch, dass*** die Spannmittel (7) der Steuermittel (6) einerseits mit einem Ende der vorderen Anströmkante (2) und andererseits mit einem Ende der hinteren Abströmkante (3) verbunden sind, wobei die Spannmittel (7) sich in Längsrichtung des Flügels (1) fortsetzen.

5. Flügel (1) nach einem der Ansprüche 1 bis 4, ***dadurch gekennzeichnet, dass*** die Spannmittel (7) längenverstellbar sind.

6. Flügel (1) nach Anspruch (1), ***dadurch gekennzeichnet, dass*** die Gurte (7a), welche Spannmittel (7) bilden, jeweils an ihrem Ende, das auf der Seite der Abströmkante (3) gelegen ist, eine Schleife (13) umfassen, wobei die Schleife (13) das Ende (14) eines Skistocks (8) aufnehmen kann, welches dem Griffstück (12) gegenüberliegt.

7. Flügel (1) nach Anspruch 4, ***dadurch gekennzeichnet, dass*** die Spannmittel (7) über abnehmbare ergänzende Befestigungsmittel (17) mit der vorderen Anströmkante (2) des Flügels (1) und mit der hinteren Abströmkante (3) des Flügels (1) verbunden sind.

8. Flügel (1) nach Anspruch 1, **dadurch gekennzeichnet, dass** er vom Typ mit einfacher Bespannung, vom Typ mit Stauluftkammern oder vom Typ mit aufblasbaren Schläuchen ist.

## Claims

1. Wing (1) intended for being worn on the back of a user practicing a boardsport, the wing (1) extending longitudinally between a front leading edge (2) and a rear trailing edge (3), and comprising at its front leading edge (2) means (4) able to maintain said leading edge (2) on the arms and shoulders of the user, said wing (1) defining between said leading edge (2) and said trailing edge (3) a reference plane forming an angle (α) with the torso plane of the user, and comprising control means (6) extending longitudinally along said leading edge (2), ***characterized in that*** said control means (6) are in the form of a strap (6a) extending longitudinally along said leading edge (2), and including at each of the ends of the leading edge (2) gripping means (7) in the form of straps (7a) allowing the user to act on the said control means (6) in order to firstly, extend or slacken said leading edge (2) and, secondly, to vary the angle (α) of the wing (1), the straps (7a) which form the gripping means comprising each a sleeve (11) attached to said strap (7a) at its end connected to the leading edge (2) and able to accommodate a handle (12) of a ski pole (8).

2. Wing (1) according to claim 1, ***characterized in that*** the control means (6) are adjustable in length.

3. Wing (1) according to claims 1 and 2, ***characterized in that*** the rear trailing edge (3) of the wing (1) includes means (5) to attach it to a body part of the user.

4. Wing (1) according to claims 1 and 2, ***characterized in that*** the rear trailing edge (3) of the wing (1) is free, ***and in that*** the gripping means (7) of the control means (6) are attached, firstly, to one end of the front leading edge (2) and, secondly, to one end of the rear trailing edge (3), said gripping means (7) extending over the length of the wing (1).

5. Wing (1) according to claims 1 to 4, ***characterized in that*** the gripping means (7) are adjustable in length.

6. Wing (1) according to claim 1, ***characterized in that*** the straps (7a) forming gripping means (7) comprise each a loop (13) at their end of the side of the trailing edge (3), said loop (13) being able to accommodate the end (14) opposite the handle (12), of a ski pole (8).

7. Wing (1) according to claim 4, ***characterized in that*** the gripping means (7) are attached to the front leading edge (2) of the wing (1) and to the rear trailing edge (3) of the wing (1) by means of additional removable fastening means (17).

8. Wing (1) according to claim 1, ***characterized in that*** it is of the type with single skin, boxes, or inflatable tubes.
